(19) **Europäisches Patentamt / European Patent Office / Office européen des brevets**

(11) **EP 2 197 698 B1**

(12) **FASCICULE DE BREVET EUROPEEN**

(45) Date de publication et mention
de la délivrance du brevet:
**04.05.2016 Bulletin 2016/18**

(21) Numéro de dépôt: **08843188.7**

(22) Date de dépôt: **03.10.2008**

(51) Int Cl.:
***B60H 1/00*** *(2006.01)*

(86) Numéro de dépôt international:
**PCT/FR2008/051793**

(87) Numéro de publication internationale:
**WO 2009/053592 (30.04.2009 Gazette 2009/18)**

(54) **SYSTEME DE CLIMATISATION POUR UN VEHICULE POURVU DE MODES AUTOMATIQUES AMELIORE**

VERBESSERTE FAHRZEUGKLIMAANLAGE MIT AUTOMATISCHEN BETRIEBSARTEN

IMPROVED VEHICLE AIR-CONDITIONING SYSTEM PROVIDED WITH AUTOMATIC MODES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **08.10.2007 FR 0707056**

(43) Date de publication de la demande:
**23.06.2010 Bulletin 2010/25**

(73) Titulaire: **Renault S.A.S.**
**92100 Boulogne-Billancourt (FR)**

(72) Inventeurs:
• **RIPOLL, CHRISTOPHE**
**F-78220 Viroflay (FR)**
• **DENIAUD, NICOLAS**
**F-78640 Saint Germain de La Grange (FR)**
• **BONNIERE, PATRICK**
**F-27200 Vernon (FR)**
• **NAVARRO, David**
**F-92210 Saint-Cloud (FR)**

(56) Documents cités:
**EP-A- 1 258 376      FR-A- 2 809 503**
**FR-A- 2 829 065**

EP 2 197 698 B1

**Description**

L'invention concerne un système de climatisation pour un véhicule apte à fonctionner selon n modes prédéterminés de régulation automatique, le système comprenant un calculateur apte à déterminer, en fonction d'un mode automatique sélectionné, une valeur de température d'air soufflé, une valeur de débit de ventilation et une valeur de commande de répartition pour commander un ensemble de chauffage, ventilation et d'air conditionné HVAC apte à réguler la température à l'intérieur d'un habitacle vers une température de consigne.

La climatisation tend à se généraliser dans les véhicules actuels et plus particulièrement la climatisation dite « régulée », qui permet à l'utilisateur de régler un niveau de confort souhaité en renseignant une consigne dans un module de commande de l'appareil de climatisation, le système se chargeant alors automatiquement de régler la température, le débit et la répartition de l'air soufflé pour parvenir rapidement à la consigne de confort demandée puis ensuite de la maintenir.

Ce mode automatique présente des inconvénients, certains groupes d'occupants jugeant que le système envoie souvent un débit d'air soufflé jugé trop élevé et trop froid sur le visage et interdit de mener confortablement une conversation pendant les premières minutes suivant un changement de consigne important. Ces occupants repassent alors en mode manuel pour y définir par exemple un niveau de ventilation et de répartition, jusqu'à ce que la température de l'habitacle approche de la consigne et réengagent le mode automatique pour maintenir cette température, faisant perdre au mode automatique de son intérêt.

De plus, les difficultés de satisfaction des utilisateurs peuvent être renforcées par des changements de climat. En effet, un mode automatique adapté à un climat peut se révéler inadapté pour un autre, ce qui peut poser des problèmes de mise au point pour des véhicules prévus pour être utilisés sous des climats différents. FR2829065 divulgue un Système selon le préambule de la revendication 1.

L'invention vise à améliorer les systèmes de l'art antérieur précédemment cités et se propose de remédier à leurs inconvénients, notamment de proposer un régulation de la température dans un espace clos, par exemple dans un habitacle de véhicule, qui puisse s'opérer suivant plusieurs modes automatiques directement actionnables par un occupant sur le tableau de bord, par exemple à l'aide d'une touche.

C'est un objet de la présente invention que de proposer un système de climatisation conforme au préambule décrit ci-dessus dont la valeur de température d'air soufflé pour le mode automatique sélectionné fournie au HVAC est déterminée en fonction de la valeur du débit de ventilation du mode sélectionné, d'une valeur de puissance thermique pour le mode automatique sélectionné et d'une valeur de coefficient d'échange thermique.

Ce système de climatisation permet de proposer des modes automatiques dont les niveaux de débit et de distribution sont différents pour atteindre une température de confort, de manière à l'adapter à l'utilisateur ou aux conditions extérieures.

Suivant des modes particuliers de réalisation, le système de climatisation comporte l'une ou plusieurs des caractéristiques suivantes :

- la valeur de puissance thermique pour le mode sélectionné est déterminée en fonction de la valeur de puissance thermique pour un mode de référence et d'une valeur de puissance d'adaptation par rapport à ce mode de référence ;
- la valeur de puissance d'adaptation est déterminée en fonction d'au moins d'une différence de débit de ventilation par rapport au mode de référence et d'une température extérieure ;
- la valeur de coefficient d'échange thermique est choisie dans un tableau comprenant des valeurs de coefficient d'échange thermique fonction du débit de ventilation ;
- le système comprend une table de débit de ventilation par mode automatique ;
- la valeur de puissance thermique pour le mode de référence est prise dans une table de correspondance identique pour les n modes automatiques et correspondant à la table de correspondance du mode de référence ;
- la valeur de puissance d'adaptation pour le mode sélectionné est prise dans une table de correspondance fonction au moins du débit de ventilation.

D'autres caractéristiques et avantages de l'invention apparaîtront clairement à la lecture de la description suivante du mode de réalisation non limitatif de celle-ci, en liaison les figures suivantes représentant un mode de réalisation selon l'invention :

- la figure 1 représente un schéma bloc de la boucle de régulation de la température dans un habitacle de véhicule selon l'invention ;
- la figure 2 détaille par un schéma bloc la détermination de la valeur de température d'air soufflé.

Dans la description qui va suivre, il est entendu que le signal SVx est le signal représentant la valeur physique Vx. Par ailleurs, par soucis de simplification, la description sera limitée à un système comprenant trois modes automatiques différents mais n'est en rien limitatif, le système étant applicable à au moins deux modes automatiques.

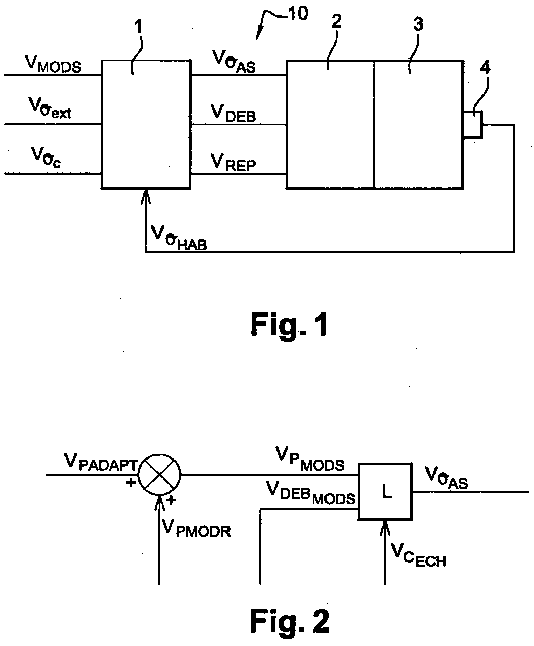

Un système de climatisation automatique 10 est représenté à la figure 1. Celui-ci comprend un calculateur de climatisation 1 commandant un ensemble de chauffage, ventilation et d'air conditionné (HVAC) 2, cet ensemble permettant de faire varier la température dans l'habitacle 3 d'un véhicule automobile, en modifiant la position de volets de mixage d'air soufflé et le fonctionnement de la boucle de production de froid en fonction des paramètres qui lui sont appliqués.

Le calculateur de climatisation 1 reçoit des signaux représentatifs du mode automatique sélectionné MODS par l'utilisateur, d'une consigne de température $\theta_c$ et d'une température extérieure $\theta_{EXT}$ à l'habitacle 3. Une température mesurée dans l'habitacle $\theta_{HAB}$ par un capteur de température d'habitacle 4 permet au calculateur 1 d'assurer la convergence vers la température de consigne $\theta_c$.

A partir de ces signaux, le calculateur de climatisation 1 détermine les paramètres de contrôle du HVAC et les transfère au HVAC, notamment pour le pilotage des volets de mixage d'air et de la boucle de production de froid. Le HVAC reçoit, par le calculateur de climatisation 1, des signaux représentatifs des températures d'air soufflé $\theta_{AS}$, de débit de ventilation DEB et de répartition REP adapté au mode automatique sélectionné MODS par l'utilisateur.

D'autres paramètres peuvent également être utilisés par le calculateur de climatisation 1 pour déterminer les paramètres de contrôle du HVAC tels que des valeurs d'ensoleillement reçu par l'habitacle ou des valeurs de vitesse du véhicule.

Sur la figure 2 est représentée un mode de réalisation de la détermination de la température d'air soufflé $\theta_{AS}$ par le calculateur 1.

La température d'air soufflé $\theta_{AS}$ est déterminée à partir d'une valeur de puissance thermique pour le mode automatique sélectionné $P_{MODS}$, d'une valeur de coefficient d'échange thermique $C_{ECH}$ et d'une valeur de débit de ventilation du mode automatique sélectionné $DEB_{MODS}$. Cette valeur de température d'air soufflé $\theta_{AS}$ peut être déterminée selon une loi de commande prédéterminée L ou bien par une table de correspondance qui aura été élaborée durant la mise au point. On pourra par exemple utiliser la loi de commande suivante :

$$\theta_{AS} = \frac{P_{MODS}}{DEB} * C_{ECH}$$

Le coefficient d'échange thermique $C_{ECH}$ pourra être pris soit comme une constante soit comme une fonction du débit de ventilation DEB et ainsi consigné dans un tableau de correspondance obtenu par mise au point du système de climatisation 10.

La puissance thermique pour le mode automatique sélectionné $P_{MODS}$ est déterminée en fonction de la valeur de puissance thermique du mode de référence $P_{MODR}$. Pour cela, le calculateur de climatisation 1 additionne la valeur de puissance thermique pour le mode automatique de référence $P_{MODR}$ et une valeur de puissance d'adaptation $P_{ADAPT}$ par rapport à ce mode de référence.

La valeur de puissance thermique pour le mode de référence $P_{MODR}$ est obtenue dans une table de correspondance unique quelque soit le mode automatique sélectionné MODS. Cette table comporte deux entrées, la température de consigne $\theta_c$ et la température extérieure $\theta_{EXT}$ et une sortie donnant la valeur de puissance pour le mode de référence $P_{MODR}$. Pour l'obtenir, lorsque le système est réglé sur le mode de référence MODR, on cherche la valeur de puissance $P_{MODR}$ qui permet d'atteindre les critères de confort satisfaisant la température de consigne $\theta_c$ souhaitée pour chaque valeur de température extérieure $\theta_{EXT}$.

Le calculateur 1 détermine la valeur de puissance d'adaptation $P_{ADAPT}$ en fonction d'une différence de débit de ventilation $\Delta_{DEB}$ pour le mode sélectionné MODS par rapport au mode de référence MODR et d'une température extérieure $\theta_{EXT}$. Cette différence de débit $\Delta_{DEB}$ est obtenue par soustraction de la valeur de débit de ventilation du mode sélectionné $DEB_{MODS}$ à la valeur de débit de ventilation du mode de référence $DEB_{MODR}$, valeurs prises dans des tableaux de correspondance respectifs.

Ces tableaux de débit de ventilation DEB peuvent être obtenus par des test effectués en soufflerie au cours desquels pour un climat, une température d'air soufflé et une répartition de l'air soufflé donnés, on balaie une plage de valeur de débit d'air soufflé jusqu'à trouver une valeur de débit qui permette d'atteindre le niveau de confort escompté et qui est apprécié par exemple grâce à un mannequin thermique. L'ensemble des valeurs de débit sont trouvées en modifiant les valeurs des paramètres figés.

Le calculateur 1 pourra obtenir la valeur de puissance d'adaptation $P_{ADAPT}$ par une table de correspondance établie durant la mise au point du système. Cette valeur pourra aussi être obtenue par calcul suivant une loi prédéterminée.

La table de correspondance associera deux entrées, la différence de débit de ventilation $\Delta_{DEB}$ et la température extérieure $\theta_{EXT}$ à une sortie donnant la puissance d'adaptation $P_{ADAPT}$ correspondante.

Cette table de correspondance est obtenue par balayage des différents modes automatiques et des températures extérieures $\theta_{EXT}$. On se place dans un mode automatique différent du mode de référence MODR et on en déduit une valeur de différence de débit de ventilation $\Delta_{DEB}$. On trouve alors la puissance d'adaptation $P_{ADAPT}$ qui permet d'atteindre la valeur de confort souhaitée. On réalise cette opération pour les autres modes automatiques puis on répète ces opérations pour chaque valeur de température extérieure $\theta_{EXT}$ à prendre en compte.

Généralement, la multiplication des modes automatiques impose de définir autant de couples de tables de correspondance pour la température d'air soufflé $\theta_{AS}$ et le débit de ventilation DEB, autrement dit si le nombre de modes automatiques est n, ceci implique d'avoir $2^n$ tables de correspondances.

Selon l'invention, pour un nombre n de modes automatiques, il suffit d'avoir n tables de correspondance pour le débit de ventilation DEB et une table pour la puissance thermique du mode de référence $P_{MODR}$ et une table pour la puissance d'adaptation $P_{ADAPT}$, soit n+2 tables de correspondances, ainsi qu'une loi de commande L et un coefficient d'échange thermique $C_{ECH}$.

L'espace mémoire du calculateur 1 peut alors être réduit et la mise au point du système de climatisation allégée. Ceci se révèle d'autant plus intéressant que les systèmes de climatisation doivent être adaptés à un nombre de plus en plus élevé de type d'utilisateurs et de climats conduisant à une multiplication importante des modes automatiques.


## Revendications

1. Système de climatisation (10), pour un véhicule, apte à fonctionner selon au moins deux modes prédéterminés de régulation automatique, le système comprenant un calculateur (1) apte à déterminer, en fonction d'un mode automatique sélectionné (MODS), une valeur de température d'air soufflé ($\theta_{AS}$), une valeur de débit de ventilation (DEB) et une valeur de commande de répartition (REP) pour commander un ensemble de chauffage, ventilation et d'air conditionné (HVAC) (2) apte à réguler la température ($\theta_{HAB}$) à l'intérieur d'un habitacle (3) vers une température de consigne ($\theta c$) **caractérisé en ce que** la valeur de température d'air soufflé ($\theta_{AS}$) pour le mode automatique sélectionné (MODS) fournie au HVAC (2) est déterminée en fonction de la valeur du débit de ventilation du mode sélectionné ($DEB_{MODS}$), d'une valeur de puissance thermique pour le mode automatique sélectionné ($P_{MODS}$) et d'une valeur de coefficient d'échange thermique ($C_{ECH}$).

2. Système de climatisation (10) selon la revendication précédente **caractérisé en ce que** la valeur de puissance thermique pour le mode sélectionné ($P_{MODS}$) est déterminée en fonction de la valeur de puissance thermique pour un mode de référence ($P_{MODR}$) et d'une valeur de puissance d'adaptation ($P_{ADAPT}$) par rapport à ce mode de référence.

3. Système de climatisation (10) selon la revendication précédente **caractérisé en ce que** la valeur de puissance d'adaptation ($P_{ADAPT}$) est déterminée en fonction d'au moins d'une différence de débit de ventilation ($\Delta_{DEB}$) par rapport au mode de référence et d'une température extérieure ($\theta_{EXT}$).

4. Système de climatisation (10) selon l'une des revendications précédentes **caractérisé en ce que** la valeur de coefficient d'échange thermique ($C_{ECH}$) est choisie dans un tableau comprenant des valeurs de coefficient d'échange thermique fonction du débit de ventilation (DEB).

5. Système de climatisation (10) selon l'une des revendications précédentes **caractérisé en ce que** il comprend une table de débit de ventilation (DEB) par mode automatique.

6. Système de climatisation (10) selon l'une des revendications 2 à 5 **caractérisé en ce que** la valeur de puissance thermique pour le mode de référence ($P_{MODR}$) est prise dans une table de correspondance identique pour les au moins deux modes automatiques et correspondant à la table de correspondance du mode de référence (MODR).

7. Système de climatisation (10) selon l'une des revendications 2 à 6 **caractérisé en ce que** la valeur de puissance d'adaptation pour le mode sélectionné ($P_{ADAPT}$) est prise dans une table de correspondance fonction au moins du débit de ventilation (DEB).


## Patentansprüche

1. Klimaanlage (10) für ein Fahrzeug, die gemäß mindestens zwei vorbestimmten Betriebsarten automatischer Regelung arbeiten kann, wobei die Anlage einen Rechner (1) enthält, der abhängig von einer ausgewählten automatischen Betriebsart (MODS) einen Gebläseluft-Temperaturwert ($\theta_{AS}$), einen Lüftungsdurchsatzwert (DEB) und einen Verteilungssteuerungswert (REP) bestimmen kann, um eine Heizungs-, Lüftungs- und Klimatisierungsanlage (HVAC) (2) zu steuern, die die Temperatur ($\theta_{HAB}$) im Inneren eines Fahrzeuginnenraums (3) auf eine Solltemperatur ($\theta c$) regeln kann, **dadurch gekennzeichnet, dass** der Gebläseluft-Temperaturwert ($\theta_{AS}$) für die ausgewählte automatische Betriebsart (MODS), der an die HVAC (2) geliefert wird, abhängig vom Wert des Lüftungsdurchsatzes der ausgewählten Betriebsart ($DEB_{MODS}$), einem Wärmeleistungswert für die ausgewählte automatische Betriebsart ($P_{MODS}$) und einem Wärmeaustauschkoeffizientenwert ($C_{ECH}$) bestimmt wird.

2. Klimaanlage (10) nach dem vorhergehenden Anspruch, **dadurch gekennzeichnet, dass** der Wärmeleistungswert für die ausgewählte Betriebsart ($P_{MODS}$) abhängig vom Wärmeleistungswert für eine Bezugsbetriebsart ($P_{MODR}$) und von einem Anpassungsleistungswert ($P_{ADAPT}$) bezüglich dieser Bezugsbetriebsart bestimmt wird.

3. Klimaanlage (10) nach dem vorhergehenden Anspruch, **dadurch gekennzeichnet, dass** der Anpassungsleistungswert ($P_{ADAPT}$) abhängig von mindestens von einem Lüftungsdurchsatzunterschied ($\Delta_{DEB}$) bezüglich der Bezugsbetriebsart und einer

Außentemperatur ($\theta_{EXT}$) bestimmt wird.

4. Klimaanlage (10) nach einem der vorhergehenden Ansprüche, **dadurch gekennzeichnet, dass** der Wärmeaustauschkoeffizientenwert ($C_{ECH}$) in einer Tabelle ausgewählt wird, die Wärmeaustauschkoeffizientenwerte abhängig vom Lüftungsdurchsatz (DEB) enthält.

5. Klimaanlage (10) nach einem der vorhergehenden Ansprüche, **dadurch gekennzeichnet, dass** sie eine Lüftungsdurchsatztabelle (DEB) pro automatischer Betriebsart enthält.

6. Klimaanlage (10) nach einem der Ansprüche 2 bis 5, **dadurch gekennzeichnet, dass** der Wärmeleistungswert für die Bezugsbetriebsart ($P_{MODR}$) aus einer gleichen Entsprechungstabelle für die mindestens zwei automatischen Betriebsarten und entsprechend der Entsprechungstabelle der Bezugsbetriebsart (MODR) entnommen wird.

7. Klimaanlage (10) nach einem der Ansprüche 2 bis 6 **dadurch gekennzeichnet, dass** der Anpassungsleistungswert für die ausgewählte Betriebsart ($P_{ADAPT}$) aus einer Entsprechungstabelle abhängig mindestens vom Lüftungsdurchsatz (DEB) entnommen wird.

**Claims**

1. Air-conditioning system (10) for a vehicle, able to operate in at least two predetermined automatic control modes, the system comprising a computer (1) able to determine, as a function of a selected automatic mode (MODS), a blown-air temperature value ($\theta_{AS}$), a ventilation flow rate value (DEB) and a distribution control value (REP) to control a heating, ventilation and air-conditioning (HVAC) unit (2) able to regulate the temperature ($\theta_{HAB}$) inside a passenger compartment (3) toward a set point temperature ($\theta c$), **characterized in that** the blown-air temperature value ($\theta_{AS}$) for the selected automatic mode (MODS) supplied to the HVAC (2) is determined as a function of the ventilation flow rate value for the selected mode ($DEB_{MODS}$), of a thermal power value for the selected automatic mode ($P_{MODS}$) and of a heat exchange coefficient value ($C_{ECH}$).

2. Air-conditioning system (10) according to the preceding claim, **characterized in that** the thermal power value for the selected mode ($P_{MODS}$) is determined as a function of the thermal power value for a reference mode ($P_{MODR}$) and an adaptation power value ($P_{ADAPT}$) for adapting with respect to this reference mode.

3. Air-conditioning system (10) according to the preceding claim, **characterized in that** the adaptation power value ($P_{ADAPT}$) is determined as a function of at least of a difference in ventilation flow rate ($\Delta_{DEB}$) with respect to the reference mode and of an external temperature ($\theta_{EXT}$).

4. Air-conditioning system (10) according to one of the preceding claims, **characterized in that** the heat exchange coefficient value ($C_{ECH}$) is chosen from a table containing heat exchange coefficient values as a function of ventilation flow rate (DEB).

5. Air-conditioning system (10) according to one of the preceding claims, **characterized in that** it comprises one ventilation flow rate table (DEB) per automatic mode.

6. Air-conditioning system (10) according to one of Claims 2 to 5, **characterized in that** the thermal power value for the reference mode ($P_{MODR}$) is taken from a look-up table that is the same for the at least two automatic modes and that corresponds to the look-up table for the reference mode (MODR).

7. Air-conditioning system (10) according to one of Claims 2 to 6, **characterized in that** the adaptation power value for the selected mode ($P_{ADAPT}$) is taken from a look-up table as a function at least of the ventilation flow rate (DEB).

$V_{MODS}$

$V_{\sigma_{ext}}$

$V_{\sigma_c}$

$V_{\sigma_{AS}}$

$V_{DEB}$

$V_{REP}$

$V_{\sigma_{HAB}}$

**Fig. 1**

$V_{PADAPT}$

$V_{PMODR}$

$V_{P_{MODS}}$

$V_{DEB_{MODS}}$

$V_{C_{ECH}}$

$V_{\sigma_{AS}}$

L

**Fig. 2**

**RÉFÉRENCES CITÉES DANS LA DESCRIPTION**

**Documents brevets cités dans la description**

- FR 2829065